# EUROPÄISCHE PATENTANMELDUNG

(11) **EP 0 655 619 A1**
(43) Veröffentlichungstag der Anmeldung: **31.05.1995**
(21) Anmeldenummer: 94117419.5
(22) Anmeldetag: 04.11.1994
(51) Int. Cl.: G01N 21/43, B60S 1/08

(54) **Sensorsystem**

(30) Priorität: 30.11.1993 DE 4340681
(71) Anmelder: TEMIC TELEFUNKEN microelectronic GmbH, D-74072 Heilbronn (DE)
(72) Erfinder: Krell, Stephan, Dr., D-91126 Schwabach (DE)
(74) Vertreter: Maute, Hans-Jürgen, Dipl.-Ing.

(57) **Zusammenfassung**

Beschrieben wird ein Sensorsystem zur Erfassung der optischen Verhältnisse an einer Grenzfläche (4) zwischen einem ersten, als Festkörper ausgebildeten Medium (2) und einem zweiten Medium (3), deren Brechungsindices unterschiedlich sind.
Das Sensorsystem besitzt eine optische Einheit aus mindestens einer Sendeeinheit (10) mit mindestens einem Sendeelement (11), mindestens einer Empfangseinheit (20) mit mindestens einem Empfangselement (21), und einer optischen Strecke (30), die die Sendeeinheit(en) mit der Empfangseinheit(en) verbindet(n).
Hierbei ist vorgesehen, daß in der optischen Strecke ein Lichtleitkörper (31) mit einer Grundfläche (32) und zwei optisch aktiven Stirnflächen (33,34) angeordnet ist, wobei die Grundfläche des Lichtleitkörpers auf der Oberflächenseite (5) des zwischen Sendeeinheit(en) und Grenzfläche befindlichen ersten Mediums befestigt ist. Die erste Stirnfläche des Lichtleitkörpers ist der(n) Sendeeinheit(en) und die zweite Stirnfläche des Lichtleitkörpers der(n) Empfangseinheit(en) zugewandt. Die beiden Stirnflächen des Lichtleitkörpers sowie die Lichtaustrittsfläche der Sendeeinheit(en) und die Lichteintrittsfläche der Empfangseinheit(en) sind in einer vorgegebenen konvexen Form ausgebildet.

## Beschreibung

Die optische Einheit von optischen Sensorsystemen besteht aus mindestens einer Sendeeinheit mit einem oder mehreren Sendeelementen, mindestens einer Empfangseinheit mit einem oder mehreren Empfangselementen und einer optischen Strecke, über die Sendeeinheit(en) und Empfangseinheit(en) miteinander gekoppelt sind. Zur Bestimmung der optischen Verhältnisse an einer Grenzfläche - diese trennt zwei Medien mit unterschiedlichem Brechungsindex voneinander - wird die von dem(n) Sendeelement(en) ausgesandte Strahlung ein- oder mehrfach an dieser Grenzfläche reflektiert, die reflektierte Strahlung von dem(n) Empfangselement(en) detektiert und die detektierte Strahlung als Empfangssignal in einer Auswerteeinheit des Sensorsystems weiterverarbeitet. Ändern sich die optischen Verhältnisse an der Grenzfläche, führt dies zur Variation des Empfangssignals, was von der Auswerteeinheit ausgewertet werden kann. Beispielsweise werten Regensensoren von Kraftfahrzeugen die durch Benetzung der Außenseite der Windschutzscheibe (Frontscheibe/Heckscheibe) mit Feuchtigkeit hervorgerufenen Änderungen der optischen Eigenschaften aus: ein Teil der von der Sendeeinheit ausgesandten Strahlung wird durch die Feuchtigkeit aus der Scheibe ausgekoppelt und kann somit nicht mehr zur Empfangseinheit gelangen; dieser Signalverlust wird registriert und ausgewertet - gegebenenfalls kann eine Betätigung der Scheibenwischer vorgenommen werden.
Damit beim Fahrer keine zusätzliche Sichtbehinderung auftritt, muß die optische Einheit möglichst kompakt gebaut sein; um Änderungen in den optischen Eigenschaften zuverlässig erfassen zu können, muß die Empfindlichkeit über die gesamte sensitive Fläche der optischen Einheit gleichmäßig sowie ausreichend sein (d.h. eine möglichst homogene Ausleuchtung gegeben sein). Diese beiden Bedingungen sind jedoch mit nur zwei optisch aktiven Flächen (Linsenoberfläche) nicht erfüllbar, so daß entweder Mehrfachreflexionen der Strahlung an der Grenzfläche vorgenommen werden oder Sensorsysteme mit einer komplizierten Optik eingesetzt werden. Nachteilig hierbei ist jedoch, daß einerseits die Strahlung eine große Wegstrecke innerhalb des einen Mediums zurücklegen muß, was wegen der hohen (mediumabhängigen) Absorption zu kleinen Empfangssignalen führt, und daß andererseits oftmals nur ein Teil der Strahlung von der(n) Sendeeinheit(en) in das Medium eintritt und somit die auszuwertende Signaländerung klein und mediumabhängig ist.

Es ist die Aufgabe der Erfindung, eine optische Einheit eines Sensorsystems mit einfacher Optik und geringer Baugröße anzugeben, bei der die genannten Nachteile vermieden werden und die vorteilhafte Eigenschaften aufweist - insbesondere eine gute Empfindlichkeit und eine homogene Empfindlichkeitsverteilung.
Diese Aufgabe wird erfindungsgemäß durch die Merkmale im Kennzeichen des Patentanspruchs 1 gelöst.
Vorteilhafte Weiterbildungen der Erfindung ergeben sich aus den Untersansprüchen.

Um bei kleiner Baugröße eine homogene Empfindlichkeitsverteilung der optischen Einheit zu gewährleisten, besitzt diese vier optisch aktive Flächen (Brechungs/Reflexionsflächen), die zwischen dem (den) Sendelement(en) der Sendeeinheit(en) und dem (den) Empfangselement(en) der Empfangseinheit(en) angeordnet sind: zwei optisch brechende Flächen werden durch die beiden nach außen gewölbten (konvexen) Stirnflächen eines in der optischen Strecke angeordneten Lichtleitkörpers gebildet, dessen Grundfläche (beispielsweise mit Hilfe eines transparenten Klebers) auf der Sendeeinheit(en) und Empfangseinheit(en) zugewandten Oberflächenseite des ersten, als Festkörper ausgebildeten Mediums befestigt ist; weiterhin wird die Stirnfläche (Strahlungsaustrittsfläche/Strahlungseintrittsfläche) des Gehäuses von Sendeeinheit(en) und Empfangseinheit(en) ebenfalls in einer nach außen gewölbten (konvexen) Form ausgeführt, so daß diese als zwei weitere optisch brechende Flächen (Sammellinsen) wirken. Die Strahlungsaustrittsfläche der Sendeeinheit und die Strahlungseintrittsfläche der Empfangseinheit weist jeweils eine schwach-konvexe Form auf, während die beiden Stirnflächen des Lichtleitkörpers demgegenüber stärker konvex ausgebildet sind. Um einen symmetrischen Strahlengang und damit eine möglichst kompakte Baugröße zu gewährleisten, besitzen sowohl Strahlungsaustrittsfläche und Strahlungseintrittsfläche die gleiche gekrümmte Form als auch die beiden Stirnflächen des Lichtleitkörpers.
Der Lichtleitkörper - beispielsweise besteht dieser aus Kunststoff und ist als integrierte Einheit aus einem prismatischen Grundkörper und zwei Konvexlinsen als Stirnflächen ausgebildet - erfüllt zwei Aufgaben: einerseits dient er als "Sammellinse" vor Sendeeinheit(en) bzw. Empfangseinheit(en) und ermöglicht zusammen mit der speziell geformten Strahlungseintrittsfläche bzw. Strahlungsaustrittsfläche der Empfangseinheit(en) bzw. Sendeeinheit(en) eine kompakte Bauweise; andererseits dient er der Einkopplung der Strahlung in das erste Medium bzw. der Auskopplung des Lichts aus diesem Medium und sorgt damit für eine gute Empfindlichkeit der optischen Einheit.
Die optische Einheit des Sensorsystems vereinigt mehrere Vorteile in sich:
- sie besitzt einen einfachen und damit kostengünstigen Aufbau,
- es ist eine kompakte Bauweise und damit eine sehr geringe Baugröße gegeben; der Abstand zwischen Sendeeinheit(en) bzw. Empfangseinheit(en) und dem Lichtleitkörper kann dadurch sehr gering gehalten werden,
- aufgrund der Einfachreflexion der Strahlung an der Grenzfläche legt die Strahlung nur eine geringe Wegstrecke im ersten Medium zwischen Sendeeinheit(en) und Grenzfläche zurück, so daß keine Probleme aufgrund von Strahlungsabsorption auftreten,
- durch die Einkopplung der Strahlung in die Grenzfläche mittels des Lichtleitkörpers ist eine hohe Empfindlichkeit gegeben,
- es kann jede beliebige elektromagnetische Strahlung verwendet werden - insbesondere sichtbares Licht oder IR-Strahlung.

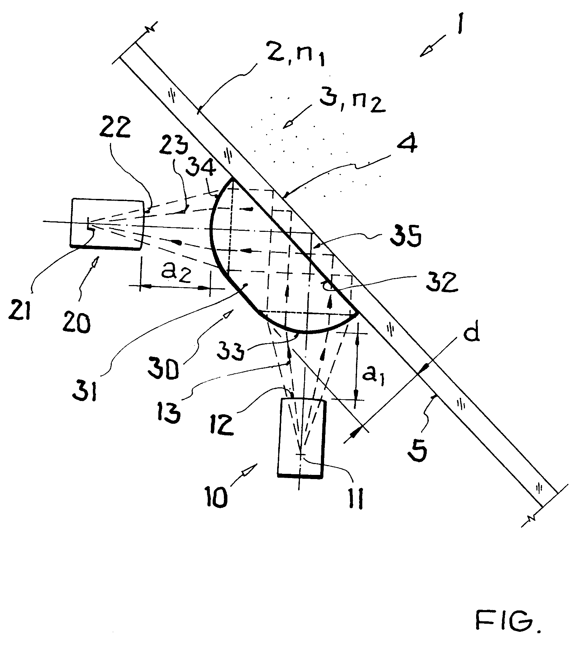

Die Erfindung wird weiterhin anhand eines in der Figur dargestellten Ausführungsbeispiels beschrieben - der optischen Einheit eines als Regendetektor bei Kraftfahrzeugen an der Windschutzscheibe angebrachten und mit IR-Strahlung arbeitenden optischen Sensorsystems.

Gemäß der Figur weist die optische Einheit 1 des Sensorsystems eine Sendeeinheit 10 mit dem Sendeelement 11 (Sendediode) und eine Empfangseinheit 20 mit dem Empfangselement 21 auf (Empfangsdiode); das Gehäuse der Sendeeinheit 10 und der Empfangseinheit 20 ist beispielsweise als transparentes Kunststoffgehäuse ausgebildet. In der optischen Strecke 30 zwischen Sendeeinheit 10 und Empfangseinheit 20 ist ein beispielsweise aus Plexiglas bestehender Lichtleitkörper 31 (Grundfläche 32, Stirnflächen 33, 34) angeordnet, der zur Einkopplung der vom Sendeelement 11 emittierten IR-Strahlung 13 in die Windschutzscheibe 2 dient bzw. zur Auskopplung der in der Windschutzscheibe 2 eingekoppelten Strahlung 35 und an der Grenzfläche 4 zwischen Windschutzscheibe 2 (Brechnungsindex n₁) und Außenseite (Luft) 3 (Brechungsindex n₂) reflektierten IR-Strahlung 23. Hierzu ist die Grundfläche 32 des Lichtleitkörpers 31 bündig (ohne Luftspalt) auf die Innenseite 5 der Windschutzscheibe 2 mittels eines transparenten Klebers aufgeklebt; seine beiden Stirnflächen 33 bzw. 34 werden in den Strahlengang der emittierten Strahlung 13 bzw. reflektierten Strahlung 23 gerichtet. Die Lichtaustrittsfläche 12 (Stirnfläche) der Sendeeinheit 10 und die Lichteintrittsfläche 22 (Stirnfläche) der Empfangseinheit 20 - die beiden ersten optisch aktiven Flächen - besitzen eine vorgegebene schwach-konvexe Form (beispielsweise durch ein Polynom zehnten Grades realisiert); die beiden Stirnflächen 33, 34 des Lichtleitkörpers 31 als weitere optisch aktive Flächen besitzen eine vorgegebene starkkonvexe Form (beispielsweise durch ein weiteres Polynom zehnten Grades realisiert). Durch das Zusammenspiel einerseits der Anordnung der optisch aktiven Flächen und andererseits ihrer speziell gekrümmten Form, kann die vom Sendeelement 11 der Sendeeinheit 10 ausgehende Strahlung 13 - ohne wesentliche Reflexionsverluste an den Genzflächen - im Empfangselement 21 der Empfangseinheit 20 gebündelt werden.
Bei einer Benetzung der Außenseite 3 der Windschutzscheibe 2 durch Regentropfen wird ein Teil der in die Windschutzscheibe 2 eingekoppelten Strahlung 35 aus dieser ausgekoppelt und gelangt somit nicht zum Empfangselement 21, was von einer nachgeschalteten Auswerteeinheit des Sensorsystems registriert und verarbeitet werden kann. Beispielsweise ist das Sendeelement 11 der Sendeeinheit 10 als IR-Sendediode und das Empfangselement 21 der Empfangseinheit 20 als IR-Empfangsdiode ausgebildet. Der Lichtleitkörper 31 besteht beispielsweise aus Plexiglas und besitzt eine elliptische Grundfläche mit einer großen Halbachse von 45 mm und einer kleinen Halbachse von 25 mm; seine Dicke d beträgt beispielsweise 17 mm. Der Abstand a₁ zwischen der ersten Stirnfläche 33 des Lichtleitkörpers 31 und der Lichtaustrittsfläche 12 der Sendeeinheit 10 und der Abstand a₂ zwischen der zweiten Stirnfläche 34 des Lichtleitkörpers 31 und der Lichteintrittsfläche 22 der Empfangseinheit 20 beträgt beispielsweise jeweils 15 mm. Bei einer schwachen Benetzung der Windschutzscheibe wird bei einer hieraus resultierenden Signaländerung des Empfangssignals von beispielsweise 5 % eine Betätigung der Scheibenwischer ausgelöst (zum Vergleich: eine Benetzung der Außenseite der Windschutzscheibe 2 infolge starken Regens führt beispielsweise zu einer Signaländerung des Empfangssignals von 20 %).

## Patentansprüche

1. Sensorsystem zur Erfassung der optischen Verhältnisse an einer Grenzfläche (4), die ein erstes, als Festkörper ausgebildetes Medium (2) und ein zweites Medium (3) voneinander trennt, deren Brechungsindices (n₁, n₂) unterschiedlich sind, wobei das Sensorsystem eine optische Einheit (1) aufweist aus:
a) mindestens einer Sendeeinheit (10) mit mindestens einem Sendeelement (11),
b) mindestens einer Empfangseinheit (20) mit mindestens einem Empfangselement (21),
c) einer optischen Strecke (30), die die Sendeeinheit(en) (10) mit der Empfangseinheit(en) (20) verbindet,
dadurch gekennzeichnet:
d) in der optischen Strecke (30) ist ein Lichtleitkörper (31) mit einer Grundfläche (32) und zwei optisch aktiven Stirnflächen (33, 34) angeordnet,
e) die Grundfläche (32) des Lichtleitkörpers (31) ist auf der sich zwischen Sendeeinheit(en) (10) bzw. Empfangseinheit(en) (20) und Grenzfläche (4) befindlichen Oberflächenseite (5) des ersten Mediums (2) befestigt,
f) die erste Stirnfläche (33) des Lichtleitkörpers (31) ist der(n) Sendeeinheit(en) (10) und die zweite Stirnfläche (34) des Lichtleitkörpers (31) der(n) Empfangseinheit(en) (20) zugewandt,
g) die beiden Stirnflächen (33, 34) des Lichtleitkörpers (31) sowie die Lichtaustrittsfläche (12) der Sendeeinheit(en) (10) und die Lichteintrittsfläche (22) der Empfangseinheit(en) sind in einer vorgegebenen konvexen Form ausgebildet.

2. Sensorsystem nach Anspruch 1, dadurch gekennzeichnet, daß die Lichtaustrittsfläche (12) der Sendeeinheit(en) (10) und die Lichteintrittsfläche (22) der Empfangseinheit(en) (20) eine derart schwach-konvexe Form und die beiden Stirnflächen (33, 34) des Lichtleitkörpers (31) eine derart stark-konvexe Form aufweisen, daß die auf die Grundfläche (32) des Lichtleitkörpers (31) auftreffende Strahlung (35) homogen verteilt ist und der Abstand (a₁) zwischen Sendeeinheit(en) (10) und Lichtleitkörper (31) bzw. der Abstand (a₂) zwischen Empfangseinheit(en) (20) und Lichtleitkörper (31) minimal ist.

3. Sensorsystem nach Anspruch 1 oder 2, dadurch gekennzeichnet, daß die Lichtaustrittsfläche (12) der Sendeeinheit(en) (10) und die Lichteintrittsfläche (22) der Empfangseinheit(en) (20) die gleiche schwach-konvexe Form aufweisen.

4. Sensorsystem nach einem der Ansprüche 1 bis 3, dadurch gekennzeichnet, daß die beiden Stirnflächen (33, 34) des Lichtleitkörpers (31) die gleiche stark-konvexe Form aufweisen.

5. Sensorsystem nach einem der Ansprüche 1 bis 4, dadurch gekennzeichnet, daß die Grundfläche (32) des Lichtleitkörpers (31) derart planar auf der einen Oberflächenseite (5) des ersten Mediums (2) angeordnet ist, daß kein Luftspalt zwischen Grundfläche (32) und Unterseite (5) vorhanden ist.

6. Sensorsystem nach Anspruch 5, dadurch gekennzeichnet, daß der Lichtleitkörper (31) mittels eines transparenten Klebers auf der einen Oberflächenseite (5) des ersten Mediums (1) befestigt ist.
